# EUROPÄISCHE PATENTSCHRIFT

(11) **EP 1 819 758 B1**
(45) Veröffentlichungstag und Bekanntmachung des Hinweises auf die Patenterteilung: **19.05.2010**
(21) Anmeldenummer: 05814173.0
(22) Anmeldetag: 01.12.2005
(51) Int. Cl.: C08J 9/00

(54) **HALOGENFREI FLAMMGESCHÜTZTE, EXPANDIERBARE STYROLPOLYMERISATE**
EXPANDABLE STYROL POLYMERS RENDERED FLAME-PROOF WITHOUT USING HALOGEN
POLYMERES STYRENIQUES EXPANSIBLES, IGNIFUGES ET SANS HALOGENES

(30) Priorität: 03.12.2004 DE 102004058586
(43) Veröffentlichungstag der Anmeldung: 22.08.2007
(73) Patentinhaber: BASF SE, 67056 Ludwigshafen (DE)
(72) Erfinder: HAHN, Klaus, 67281 Kirchheim (DE); EHRMANN, Gerd, 67146 Deidesheim (DE); RUCH, Joachim, 67157 Wachenheim (DE); ALLMENDINGER, Markus, 67480 Edenkoben (DE); SCHMIED, Bernhard, 67227 Frankenthal (DE)
(86) Internationale Anmeldenummer: PCT/EP2005/012798
(87) Internationale Veröffentlichungsnummer: WO 2006/058734

(56) Entgegenhaltungen:
- EP-A- 0 834 529
- WO-A-00/34367

## Beschreibung

Die Erfindung betriff halogenfrei flammgeschützte, expandierbare, Styrolpolymergranulate, enthaltend
a) 5 bis 50 Gew.-% eines Füllstoffes, ausgewählt aus pulverförmigen anorganische Stoffen, wie Talk, Kreide, Kaolin, Aluminiumhydroxid, Aluminiumnitrit, Aluminiumsilikat, Bariumsulfat, Calciumcarbonat, Titandioxid, Calciumsulfat, Kieselsäure, Quarzmehl, Areosil, Tonerde oder Wollastonit und
b) 2 bis 40 Gew.-% Blähgraphit mit einer mittleren Teilchengröße im Bereich von 10 bis 1000 µm,
c) 0 bis 20 Gew.-% roter Phosphor oder ein organisches oder anorgansiches Phosphat, Phosphit oder Phosphonat,
d) 0 bis 10 Gew.-% Ruß oder Graphit.

Halogenfreie Flammschutzmittel enthaltende, expandierbare Styrolpolymerisate sind bekannt. Nach EP-A 0 834 529 wird als Flammschutzmittel mindestens 12 Gew.-% einer Mischung aus einer Phosphorverbindung und einem wasserabspaltenden Metallhydroxid, beispielsweise Triphenylphosphat und Magnesiumhydroxid eingesetzt, um Schaumstoffe zu erhalten, die den Brandtest B2 nach DIN 4102 bestehen.

Die WO 00/34342 beschreibt expandierbare Styrolpolymerisate, die als Flammschutzmittel 5 bis 50 Gew.-% Blähgraphit sowie gegebenenfalls 2 bis 20 Gew.-% einer Phosphorverbindung enthalten.

Um einen ausreichenden Flammschutz zu erreichen, müssen bei halogenfreien Flammschutzmittel in der Regel sehr große Mengen teuerer Einsatzstoffe eingesetzt werden.

Aufgabe der vorliegenden Erfindung war es daher einen preisgünstigen und wirkungsvollen, halogenfreien Flammschutz für expandierbare Styrolpolymerisate zu finden. Demgemäß wurden die oben beschriebenen, expandierbaren Styrolpolymergranulate gefunden.

Bevorzugte expandierbare Styrolpolymergranulate enthalten als Komponente c) 1 bis 10 Gew.-% roter Phosphor, Triphenylphosphat oder 9,10-dihydro-9-oxa-10phosphaphenantren-10-oxid und als Komponente d) einen als IR-Absorber wirksamen, von Blähgraphit verschiedenen Graphit mit einer mittleren Teilchengröße im Bereich von 0,1 bis 100 µm in Mengen von 0,1 bis 5 Gew.-%.

Des weiteren wurden Partikelschaumformteile, erhältlich durch Verschweißen von vorgeschäumten Schaumpartikeln aus expandierbaren, Füllstoff enthaltenden, thermoplastischen Polymergranulaten, gefunden, wobei der Partikelschaumstoff eine Dichte im Bereich von 8 bis 200 g/l, bevorzugt im Bereich von 10 bis 50 g/l aufweist.

Überraschenderweise zeigen der erfindungsgemäßen Partikelschaumformteile trotz der Anwesenheit von Füllstoffen eine hohe Geschlossenzelligkeit, wobei in der Regel mehr als 60 %, bevorzugt mehr als 70, besonders bevorzugt mehr als 80 % der Zellen der einzelnen Schaumpartikel geschlossenzellig sind.

Als Füllstoffe kommen organische und anorganische Pulver oder Faserstoffe, sowie Mischungen davon in Betracht. Als organische Füllstoffe können z. B. Holzmehl, Stärke, Flachs-, Hanf-, Ramie-, Jute-, Sisal- Baumwoll- Cellulose oder Aramidfasern eingesetzt werden. Als anorganische Füllstoffe können z. B. Carbonate, Silikate, Schwerspat, Glaskugeln, Zeolithe oder Metalloxide eingesetzt werden. Bevorzugt werden pulverförmige anorganische Stoffe, wie Talk, Kreide, Kaolin (Al₂(Si₂O₅)(OH)₄), Aluminiumhydroxid, Magnesiumhydroxid, Aluminiumnitrit, Aluminiumsilikat, Bariumsulfat, Calciumcarbonat, Calciumsulfat, Kieselsäure, Quarzmehl, Aerosil, Tonerde oder Wollastonit oder Kugel- oder faserförmige, anorganische Stoffe, wie Glaskugeln, Glasfasern oder Kohlefasern.

Die mittleren Teilchendurchmesser bzw. bei faserförmigen Füllstoffen die Länge sollte im Bereich der Zellgröße oder kleiner liegen. Bevorzugt wird ein mittlerer Teilchendurchmesser im Bereich von 1 bis 100 µm, bevorzugt im Bereich von 2 bis 50 µm.

Besonders bevorzugt werden anorganische Füllstoffe mit einer Dichte im Bereich von 2,0 bis 4,0 g/cm³, insbesondere im Bereich von 2,5 bis 3,0 g/cm³. Der Weißgrad/Helligkeit (DIN/ISO) beträgt bevorzugt 50 bis 100 %, insbesondere 70 bis 98 %. Die Ölzahl nach ISO 787/5 der bevorzugten Füllstoffe liegt im Bereich von 2 bis 200 g/100 g, insbesondere im Bereich von 5 bis 150 g/100 g.

Durch die Art und Menge der Füllstoffe können die Eigenschaften der expandierbaren thermoplastischen Polymeren und der daraus erhältlichen Partikelschaumstoffformteile beeinflussen. Der Anteil des Füllstoffes liegt in der Regel im Bereich von 1 bis 50, bevorzugt 5 bis 30 Gew.-%, bezogen auf das thermoplastische Polymer. Bei Füllstoffgehalten im Bereich von 5 bis 15 Gew.-% wird keine wesentliche Verschlechterung der mechanischen Eigenschaften der Partikelschaumstoffe, wie Biegefestigkeit oder Druckfestigkeit beobachtet. Durch die Verwendung von Haftvermittlern, wie Maleinsäureanhydrid-modifizierte Styrolcopolymere, epoxidgruppenhaltige Polymere, Organosilane oder Styrolcopolymere mit Isocyanat- oder Säuregruppen kann die Anbindung des Füllstoffes an die Polymermatrix und damit die mechanischen Eigenschaften der Partikelschaumformteile deutlich verbessert werden.

In der Regel verringern anorganische Füllstoffe die Brennbarkeit. Insbesondere durch Zusatz von anorganischen Pulvern, wie Aluminiumhydroxid kann das Brandverhalten deutlich verbessert werden.

Überraschenderweise zeigen die erfindungsgemäßen thermoplastischen Polymergranulate auch bei hohen Füllstoffgehalten einen geringen Treibmittelverlust bei der Lagerung. Aufgrund der nukleierenden Wirkung ist auch eine Verringerung des Treibmittelgehaltes, bezogen auf das Polymer, möglich.

Als thermoplastische Polymere können beispielsweise Styrolpolymere, Polyamide (PA), Polyolefine, wie Polypropylen (PP), Polyethylen (PE) oder Polyethylen-Propylencopolymere, Polyacrylate, wie Polymethylmethaceylat (PMMA), Polycarbonat (PC), Polyester, wie Polyethylentherephtalat (PET) oder Polybutylenterephftalat (PBT), Polyethersulfone (PES), Polyehterketone oder Polyethersulfide (PES) oder Mischungen davon eingesetzt werden. Besonders bevorzugt werden Styrolpolymere eingeszetzt.

Es hat sich gezeigt, dass Styrolpolmere mit Molekulargewichten M_{w} von unter 160.000 bei der Granulierung zu Polymerabrieb führen. Bevorzugt weist das expandierbare Styrolpolymer ein Molekulargewicht im Bereich von 190.000 bis 400.000 g/mol, besonders bevorzugt im Bereich von 220.000 bis 300.000 g/mol auf. Aufgrund des Molekulargewichtsabbaus durch Scherung und/oder Temperatureinwirkung liegt das Molekulargewicht des expandierbaren Polystyrols in der Regel etwa 10.000 g/mol unter dem Molekulargewicht des eingesetzten Polystyrols.

Um möglichst kleine Granulatpartikel zu erhalten, sollte die Strangaufweitung nach dem Düsenaustritt möglichst gering sein. Es hat sich gezeigt, dass die Strangaufweitung unter anderem durch die Molekuargewichtsverteilung des Styrolpolymeren beeinflusst werden kann. Das expandierbare Styrolpolymer sollte daher bevorzugt eine Molekulargewichtsverteilung mit einer Uneinheitlichkeit M_{w}/Mₙ von höchstens 3,5, besonders bevorzugt im Bereich von 1,5 bis 2,8 und ganz besonders bevorzugt im Bereich von 1,8 bis 2,6 aufweisen.

Bevorzugt werden als Styrolpolymere glasklares Polystyrol (GPPS), Schlagzähpolystyrol (HIPS), anionisch polymerisiertes Polystyrol oder Schlagzähpolystyrol (A-IPS), Styrol-a-Methstyrol-copolymere, Acrylnitril-Butadien-Styrolpolymerisate (ABS), Styrol-Acrylnitril (SAN) Acrylnitril-Styrol-Acrylester (ASA), Methyacrylat-Butadien-Styrol (MBS), Methylmethacrylat-Acrylnitril-Butadien-Styrol (MABS)- polymerisate oder Mischungen davon oder mit Polyphenylenether (PPE) eingesetzt.

Die genannten Styrolpolymeren können zur Verbesserung der mechanischen Eigenschaften oder der Temperaturbeständigkeit gegebenenfalls unter Verwendung von Verträglichkeitsvermittlern mit thermoplastischen Polymeren, wie Polyamiden (PA), Polyolefinen, wie Polypropylen (PP) oder Polyethylen (PE), Polyacrylaten, wie Polymethylmethacrylat (PMMA), Polycarbonat (PC), Polyestern, wie Polyethylentherephthalat (PET) oder Polybutylenterephthalat (PBT), Polyethersulfonen (PES), Polyetherketonen oder Polyethersulfiden (PES) oder Mischungen davon in der Regel in Anteilen von insgesamt bis maximal 30 Gew.-%, bevorzugt im Bereich von 1 bis 10 Gew.-%, bezogen auf die Polymerschmelze, abgemischt werden. Desweiteren sind Mischungen in den genannten Mengenbereichen auch mit z. B hydrophob modifizierten oder funktionalisierten Polymeren oder Oligomeren, Kautschuken, wie Polyacrylaten oder Polydienen, z. B. Styrol-Butadien-Blockcopolymeren oder biologisch abbaubaren aliphatischen oder aliphatisch/aromatischen Copolyestern möglich.

Als Verträglichkeitsvermittler eignen sich z.B. Maleinsäureanhydrid-modifizierte Styrolcopolymere, Epoxidgruppenhaltige Polymere oder Organosilane.

Der Styrolpolymerschmelze können auch Polymerrecyklate der genannten thermoplastischen Polymeren, insbesondere Styrolpolymere und expandierbare Styrolpolymerer (EPS) in Mengen zugemischt werden, die deren Eigenschaften nicht wesentlich verschlechtern, in der Regel in Mengen von maximal 50 Gew.-%, insbesondere in Mengen von 1 bis 20 Gew.-%.

Die treibmittelhaltige Styrolpolymerschmelze enthält in der Regel eine oder mehrere Treibmittel in homogener Verteilung in einem Anteil von insgesamt 2 bis 10 Gew.-% bevorzugt 3 bis 7 Gew.-%, bezogen auf die treibmittelhaltige Styrolpolyermschmelze. Als Treibmittel, eigenen sich die üblicherweise in EPS eingesetzten physikalische Treibmittel, wie aliphatischen Kohlenwasserstoffe mit 2 bis 7 Kohlenstoffatomen, Alkohole, Ketone, Ether oder halogenierte Kohlenwasserstoffe. Bevorzugt wird iso-Butan, n-Butan, iso-Pentan, n-Pentan eingesetzt.

Zur Verbesserung der Verschäumbarkeit können feinverteilte Innenwassertröpfchen in die Styrolpolymermatirx eingebracht werden. Dies kann beispielsweise durch die Zugabe von Wasser in die aufgeschmolzene Styrolpolymermatrix erfolgen. Die Zugabe des Wassers kann örtlich vor, mit oder nach der Treibmitteldosierung erfolgen. Eine homogene Verteilung des Wassers kann mittels dynamischen oder statischen Mischern erreicht werden.

In der Regel sind 0 bis 2, bevorzugt 0,05 bis 1,5 Gew.-% Wasser, bezogen auf das Styrolpolymer, ausreichend.

Expandierbare Styrolpolymere (EPS) mit mindestens 90% des Innenwassers in Form von Innenwassertröpfchen mit einem Durchmesser im Bereich von 0,5 bis 15 µm bilden beim Verschäumen Schaumstoffe mit ausreichender Zellzahl und homogener Schaumstruktur.

Die zugesetzte Treibmittel- und Wassermenge wird so gewählt, dass die expandierbaren Styrolpolymeren (EPS) ein Expansionsvermögen α, definiert als Schüttdichte vor dem Verschäumen/Schüttdichte nach dem Verschäumen höchstens 125 bevorzugt 25 bis 100 aufweisen.

Die erfindungsgemäßen expandierbaren Styrolpolymergranulate (EPS) weisen in der Regel eine Schüttdichte von höchstens 700 g/l bevorzugt im Bereich von 590 bis 660 g/l auf. Bei Verwendung von Füllstoffen können in Abhängigkeit von der Art und Menge des Füllstoffes Schüttdichten im Bereich von 590 bis 1200 g/l auftreten.

Des weiteren können der Styrolpolymerschmelze zusätzlich zu den Füllstoffen Additive, Keimbildner, Weichmacher, Flammschutzmittel, lösliche und unlösliche anorganische und/oder organische Farbstoffe und Pigmente, z.B. IR-Absorber, wie Ruß, Graphit oder Aluminiumpulver gemeinsam oder räumlich getrennt, z.B. über Mischer oder Seitenextruder zugegeben werden. In der Regel werden die Farbstoffe und Pigmente in Mengen im Bereich von 0,01 bis 30, bevorzugt im Bereich von 1 bis 5 Gew.-% zugesetzt. Zur homogenen und mikrodispersen Verteilung der Pigmente in dem Styrolpolymer kann es insbesondere bei polaren Pigmenten zweckmäßig sein ein Dispergierhilfsmittel, z.B Organosilane, epoxygruppenhaltige Polymere oder Maleinsäureanhydrid-gepfropfte Styrolpolymere, einzusetzen. Bevorzugte Weichmacher sind Mineralöle, niedermolekulare Styrolpolymere, Phthalate, die in Mengen von 0,05 bis 10 Gew.-%, bezogen auf das Styrolpolymerisat, eingesetzt werden können.

Füllstoffe mit Partikelgrößen im Bereich von 0,1 bis 100 µm, insbesondere im Bereich von 0,5 bis 10 µm ergeben im Polystyrol-Schaumstoff bei Gehalten von 10 Gew.-% eine Absenkung der Wärmeleitfähigkeit um 1 bis 3 mW. Daher lassen sich schon bei geringeren Mengen an IR-Absorbern, wie Ruß und Graphit vergleichsweise niedrige Wärmeleitfähigkeiten erreichen.

Bevorzugt wird zur Verringerung der Wärmeleitfähigkeit ein IR-Absorber, wie Ruß oder Graphit in Mengen von 0,1 bis 10 Gew.-%, insbesondere in Mengen von 2 bis 8 Gew.-% eingesetzt.

Bei Verwendung von geringeren Mengen an Füllstoffen, z. B. unter 5 Gew.-%, ist es auch möglich, Ruß in Mengen von 1 bis 25 Gew.-%, bevorzugt im Bereich von 10 bis 20 Gew.-% einzusetzen. Bei diesen hohen Rußgehalten wird die Rußzugabe bevorzugt aufgeteilt über den Hauptstrom- und einen Seitenstromextruder in die Styrolpolymerschmelze eingemischt. Die Zugabe über Extruder ermöglicht eine einfache Zerkleinerung der Rußagglomerate auf eine mittlere Agglomeratgröße im Bereich von 0,3 bis 10 µm, bevorzugt im Bereich von 0,5 bis 5 µm und homogene Färbung der expandierbaren Styrolpolymergranulate, die zu geschlossenzelligen Schaumstoffpartikel mit einer Dichte im Bereich von 5 - 40 kg/m³, insbesondere 10 -15 kg/m³ verschäumt werden können. Die mit 10 bis 20 Gew.-% Ruß nach Verschäumen und Versintern erhältlichen Partikelschaumstoffe erreichen eine Wärmeleitfähigkeit λ, bestimmt bei 10°C nach DIN 52612, im Bereich von 30 bis 33 mW/mK.

Bevorzugt wird Ruß mit einer mittleren Primär-Teilchengröße im Bereich von 10 bis 300 nm, insbesondere im Bereich von 30 bis 200 nm eingesetzt. Die BET-Oberfläche liegt bevorzugt im Bereich von 10 bis 120 m²/g.

Als Graphit wird bevorzugt Graphit mit einer mittleren Teilchengröße im Bereich von 1 bis 50 µm eingesetzt.

Zur Herstellung der erfindungsgemäßen expandierbaren Styrolpolymerisate wird das Treibmittel in die Polymerschmelze eingemischt. Das Verfahren umfasst die Stufen a) Schmelzerzeugung, b) Mischen c) Kühlen d) Fördern und e) Granulieren. Jede dieser Stufen kann durch die in der Kunststoffverarbeitung bekannten Apparate oder Apparatekombinationen ausgeführt werden. Zur Einmischung eignen sich statische oder dynamische Mischer, beispielsweise Extruder. Die Polymerschmelze kann direkt aus einem Polymerisationsreaktor entnommen werden oder direkt in dem Mischextruder oder einem separaten Aufschmelzextruder durch Aufschmelzen von Polymergranulaten erzeugt werden. Die Kühlung der Schmelze kann in den Mischaggregaten oder in separaten Kühlern erfolgen. Für die Granulierung kommen beispielsweise die druckbeaufschlagte Unterwassergranulierung, Granulierung mit rotierenden Messern und Kühlung durch Sprühvernebelung von Temperierflüssigkeiten oder Zerstäubungsgranulation in Betracht. Zur Durchführung des Verfahrens geeignete Apparateanordnungen sind z.B.:
a) Polymerisationsreaktor - statischer Mischer/Kühler - Granulator
b) Polymerisationsreaktor - Extruder - Granulator
c) Extruder - statischer Mischer - Granulator
d) Extruder - Granulator

Weiterhin kann die Anordnung Seitenextruder zur Einbringung von Additiven, z.B. von Feststoffen oder thermisch empfindlichen Zusatzstoffen aufweisen.

Die treibmittelhaltige Styrolpolymerschmelze wird in der Regel mit einer Temperatur im Bereich von 140 bis 300°C, bevorzugt im Bereich von 160 bis 240°C durch die Düsenplatte gefördert. Eine Abkühlung bis in den Bereich der Glasübergangstemperatur ist nicht notwendig.

Die Düsenplatte wird mindestens auf die Temperatur der treibmittelhaltigen Polystyrolschmelze beheizt. Bevorzugt liegt die Temperatur der Düsenplatte im Bereich von 20 bis 100°C über der Temperatur der treibmittelhaltigen Polystyrolschmelze. Dadurch werden Polymerablagerungen in den Düsen verhindert und eine störungsfreie Granulierung gewährleistet.

Um marktfähige Granulatgrößen zu erhalten sollte der Durchmesser (D) der Düsenbohrungen am Düsenaustritt im Bereich von 0,2 bis 1,5 mm, bevorzugt im Bereich von 0,3 bis 1,2 mm, besonders bevorzugt im Bereich von 0,3 bis 0,8 mm liegen. Damit lassen sich auch nach Strangaufweitung Granulatgrößen unter 2 mm, insbesondere im Bereich 0,4 bis 1,4 mm gezielt einstellen.

Die Strangaufweitung kann außer über die Molekulargewichtsverteilung durch die Düsengeometrie beeinflusst werden. Die Düsenplatte weist bevorzugt Bohrungen mit einem Verhältnis UD von mindestens 2 auf, wobei die Länge (L) den Düsenbereich, dessen Durchmesser höchstens dem Durchmesser (D) am Düsenaustritt entspricht, bezeichnet. Bevorzugt liegt das Verhältnis UD im Bereich von 3 - 20.

Im allgemeinen sollte der Durchmesser (E) der Bohrungen am Düseneintritt der Düsenplatte mindestens doppelt so groß wie der Durchmesser (D) am Düsenaustritt sein.

Eine Ausführungsform der Düsenplatte weist Bohrungen mit konischem Einlauf und einem Einlaufwinkel α kleiner 180°, bevorzugt im Bereich von 30 bis 120° auf. In einer weiteren Ausführungsform besitzt die Düsenplatte Bohrungen mit konischem Auslauf und einen Auslaufwinkel β kleiner 90°, bevorzugt im Bereich von 15 bis 45°. Um gezielte Granulatgrößenverteilungen der Styrolpolymeren zu erzeugen kann die Düsenplatte mit Bohrungen unterschiedlicher Austrittsdurchmesser (D) ausgerüstet werden. Die verschiedenen Ausführungsformen der Düsengeometrie können auch miteinander kombiniert werden.

Ein besonders bevorzugtes Verfahren zur Herstellung von expandierbaren Styrolpolymeren, umfasst die Schritte
a) Polymerisation von Styrolmonomer und gegebenenfalls copolymersierbaren Monomeren,
b) Entgasung der erhaltenen Styrolpolymerschmelze,
c) Einmischen des Treibmittels und gegebenenfalls Additiven, in die Styrolpolymerschmelze mittels statischen oder dynamischen Mischer bei einer Temperatur von mindestens 150°C, bevorzugt 180 - 260°C,
d) Kühlen der treibmittelhaltigen Styrolpolymerschmelze auf eine Temperatur, die mindestens 120°C, bevorzugt 150 - 200°C beträgt,
e) Zugabe des Füllstoffs,
f) Austrag durch eine Düsenplatte mit Bohrungen, deren Durchmesser am Düsenaustritt höchstens 1,5 mm beträgt und
g) Granulieren der treibmittelhaltigen Schmelze.

In Schritt g) kann die Granulierung direkt hinter der Düsenplatte unter Wasser bei einem Druck im Bereich von 1 bis 25 bar, bevorzugt 5 bis 15 bar erfolgen.

Aufgrund der Polymerisation in Stufe a) und Entgasung in Stufe b) steht für die Treibmittelimpägnierung in Stufe c) direkt eine Polymerschmelze zur Verfügung und ein Aufschmelzen von Styrolpolymeren ist nicht notwendig. Dies ist nicht nur wirtschaftlicher, sondern führt auch zu expandierbaren Styrolpolymeren (EPS) mit niedrigen Styrolmonomergehalten, da die mechanischen Schereinwirkung im Aufschmelzbereich eines Extruders, die in der Regel zu einer Rückspaltung von Monomeren führt, vermieden wird. Um den Styrolmonomerengehalt niedrig zu halten, insbesondere unter 500 ppm mit Styrolmomomergehalten, ist es ferner zweckmäßig, den mechanischen und thermischen Energieeintrag in allen folgenden Verfahrensstufen so gering wie möglich zu halten. Besonders bevorzugt werden daher Scherraten unter 50/sec, bevorzugt 5 bis 30/sec, und Temperaturen unter 260°C sowie kurze Verweilzeiten im Bereich von 1 bis 20, bevorzugt 2 bis 10 Minuten in den Stufen c) bis e) eingehalten. Besonders bevorzugt werden ausschließlich statische Mischer und statische Kühler im gesamten Verfahren eingesetzt. Die Polymerschmelze kann durch Druckpumpen, z. B. Zahnradpumpen gefördert und ausgetragen werden.

Eine weitere Möglichkeit zur Verringerung des Styrolmonomerengehaltes und/oder Restlösungsmittel wie Ethylbenzol besteht darin, in Stufe b) eine Hochentgasung mittels Schleppmitteln, beispielsweise Wasser, Stickstoff oder Kohlendioxid, vorzusehen oder die Polymerisationsstufe a) anionisch durchzuführen. Die anionische Polymerisation von Styrol führt nicht nur zu Styrolpolymeren mit niedrigem Styrolmonomeranteil, sondern gleichzeitig zur geringen Styrololigomerenanteilen.

Zur Verbesserung der Verarbeitbarkeit können die fertigen expandierbaren Styrolpolymergranulate durch Glycerinester, Antistatika oder Antiverklebungsmittel beschichten werden.

Die erfindungsgemäßen expandierbaren Styrolpolymergranulate (EPS) weisen in Abhängigkeit von Füllstoff-Art und -Gehalt in der Regel höhere Schüttdichten auf, die im allgemeinen im Bereich von 590 bis 1200 g/l liegen.

Die erfindungsgemäßen expandierbaren thermoplastischen Polymergranulate zeigen auch bei geringen Treibmittelgehalten ein gutes Expansionsvermögen. Die Verklebung ist auch ohne Beschichtung deutlich geringer als bei herkömmlichen EPS-Perlen.

Aufgrund seiner Schichtgitterstruktur ist Graphit in der Lage, spezielle Formen von Einlagerungsverbindungen zu bilden. In diesen sogenannten Zwischengitterverbindungen sind Fremdatome oder -moleküle in z.T. stöchiometrischen Verhältnissen in die Räume zwischen den Kohlenstoffatomen aufgenommen worden. Diese Graphitverbindungen, z.B. mit Schwefelsäure als Fremdmolekül, die auch in technischem Maßstab hergestellt werden, werden als Blähgraphit bezeichnet. Die Dichte dieses Blähgraphits liegt im Bereich von 1,5 bis 2,1 g/cm³, die mittlere Teilchengröße im allgemeinen zweckmäßigerweise bei 10 bis 1000 µm, im vorliegenden Fall vorzugsweise bei 20 bis 500 µm und insbesondere bei 30 bis 300 µm.

Als Phosphorverbindungen können anorganische oder organische Phosphate, Phosphite oder Phosphonate sowie roter Phosphor, eingesetzt werden. Bevorzugte Phosphorverbindungen sind beispielsweise Diphenylphosphat, Triphenylphosphat, Diphenylkresylphosphat, Ammoniumpolyphosphat, Resorcinoldiphenylphosphat, Melaminphosphat, Phenylphosphonsäuredimethylester oder Dimethylmethylphosphonat.

Die erfindungsgemäßen expandierbaren, Styrolpolymergranulate können mittels Heißluft oder Wasserdampf zu Schaumpartikeln mit einer Dichte im Bereich von 8 bis 200 kg/m³, bevorzugt im Bereich von 10 bis 50 kg/m³ vorgeschäumt und anschließend in einer geschlossenen Form zu Schaumstoffformkörpern verschweißt werden. Aufgrund der synergistischen Wirkung von Füllstoffen, wie Kreide mit Blähgraphit und rotem Phosphor oder einer Phosphorverbindung kann ein kostengünstiger, halegenfreier Flammschutz erreicht werden.

### Beispiele:

7 Gew.-% n-Pentan wurden in eine Polystyrolschmelze aus PS 148G der BASF Aktiengesellschaft mit einer Viskositätszahl VZ von 83 ml/g (M_{w} = 220.000 g/mol, Uneinheitlichkeit M_{w}/Mₙ = 2,9) eingemischt. Nach Abkühlen der treibmittelhaltigen Schmelze von ursprüngliche 260°C auf eine Temperatur von 190°C, wurde eine Polystyrolschmelze, welche die in Tabelle 1 genannten Füllstoffe (Kreide) und die entsprechenden Flammschutzmittelmischung (Blähgraphit: ES 350 F5 der Fa. Kropfmühl, roter Phosphor, Triphenylphosphat (TPP) oder, 9,10-Dihydro-9-oxa-10-phospha-phenanthren-10-oxid (DOP)) enthielt, über einen Seitenstromextruder in den Hauptstrom eingemischt. Die angegebenen Mengen in Gew.-% beziehen auf die gesamte Polystyrolmenge.

Das Gemisch aus Polystyrolschmelze, Treibmittel, Füllstoff und Flammschutzmittel wurde mit 60 kg/h durch eine Düsenplatte mit 32 Bohrungen (Durchmesser der Düse 0,75 mm) gefördert. Mit Hilfe einer druckbeaufschlagten Unterwassergranulierung wurden kompakte Granulate mit enger Größenverteilung hergestellt.

Diese Granulate wurden in strömendem Wasserdampf zu Schaumstoffperlen mit einer Dichte im Bereich von 10-15 kg/m³ vorgeschäumt, 24 Stunden zwischengelagert und anschließend in gasdichten Formen mit Wasserdampf zu Schaumstoffkörpem verschweißt.

Vor Untersuchung des Brandverhaltens und der Wärmeleitfähigkeit λ (bestimmt bei 10°C nach DIN 52612) wurden die Probenkörper für mindestens 72 Stunden gelagert. Die Beispiele 1 - 4 waren selbstverlöschend und bestanden den Brandtest B2 nach DIN 4102.

**Tabelle 1:**

| Beispiel | Kreide [Gew.-%] | Blähgrafit [Gew.-%] | Phosphor(verbindung) [Gew.-%] | Dichte [kg/m³] | Wärmeleitzahl [mW/m*K] |
|---|---|---|---|---|---|
| | | | 4, roter Phosphor | | |
| 1 | 5 | 6 | 1,5 TPP | 12,5 | 36,0 |
| 2 | 10 | 6 | 6, roter Phosphor | | |
| 3 | 5 | 10 | 6 TPP | 12,7 | 34,5 |
| 4 | 5 | 6 | 6 DOP | | |

## Patentansprüche

1. Expandierbare Styrolpolymergranulate, enthaltend
a) 5 bis 50 Gew.-% eines Füllstoffes, ausgewählt aus pulverförmigen anorganische Stoffen, wie Talk, Kreide, Kaolin, Aluminiumhydroxid, Aluminiumnitrit, Aluminiumsilikat, Bariumsulfat, Calciumcarbonat, Titandioxid, Calciumsulfat, Kieselsäure, Quarzmehl, Aerosil, Tonerde oder Wollastonit und
b) 2 bis 40 Gew.-% Blähgraphit mit einer mittleren Teilchengröße im Bereich von 10 bis 1000 µm,
c) 0 bis 20 Gew.-% roter Phosphor oder ein organisches oder anorganisches Phosphat, Phosphit oder Phosphonat,
d) 0 bis 10 Gew.-% Ruß oder Graphit.

2. Expandierbare Styrolpolymergranulate nach Anspruch 1, **dadurch gekennzeichnet, dass** sie 1 bis 10 Gew.-% roter Phosphor, Triphenylphosphat oder 9,10-dihydro-9-oxa-10phospha-phenantren-10-oxid enthalten.

3. Expandierbare Styrolpolymergranulate nach Anspruch 2, **dadurch gekennzeichnet, dass** sie 0,1 bis 5 Gew.-% Graphit mit einer mittleren Teilchengröße im Bereich von 0,1 bis 100 µm enthalten.

4. Expandierbare Styrolpolymeregranulate nach einem der Ansprüche 1 bis 3, **dadurch gekennzeichnet, dass** sie 3 bis 7 Gew.-% eines organischen Treibmittels enthalten.

5. Verfahren zur Herstellung von expandierbaren Styrolpolymerisaten, umfassend die Schritte
a) Einmischen
(i) eines organischenTreibmittels,
(ii) 5-50 Gew.-%, bezogen auf das Styolpolymerisat, eines Füllstoffes, ausgewählt aus pulverförmigen anorganische Stoffen, wie Talk, Kreide, Kaolin, Aluminiumhydroxid, Aluminiumnitrit, Aluminiumsilikat, Bariumsulfat, Calciumcarbonat, Titandioxid, Calciumsulfat, Kieselsäure, Quarzmehl, Areosil, Tonerde oder Wollastonit und
(iii) 2 bis 40 Gew.-%, bezogen auf das Styolpolymerisat, Blähgraphit mit einer mittleren Teilchengröße im Bereich von 10 bis 1000 µm in die Styrolpolmerisatschmelze mittels statischen oder dynamischen Mischer bei einer Temperatur von mindestens 150°C,
b) Kühlen der treibmittel- und Füllstoff-haltigen Polymerschmelze auf eine Temperatur von mindestens 120°C
c) Austrag durch eine Düsenplatte mit Bohrungen, deren Durchmesser am Düsenaustritt höchstens 1,5 mm beträgt und
d) Granulieren der treibmittelhaltigen Schmelze direkt hinter der Düsenplatte unter Wasser bei einem Druck im Bereich von 1 bis 20 bar.

6. Verfahren zur Herstellung von Partikelschaumstoffformteilen, **dadurch gekennzeichnet, dass** man expandierbare, Styrolpolymergranulate gemäß Anspruch 1 in einem ersten Schritt mittels Heißluft oder Wasserdampf zu Schaumpartikeln mit einer Dichte im Bereich von 8 bis 200 g/l vorschäumt und in einem zweiten Schritt in einer geschlossenen Form verschweißt.

## Claims

1. An expandable styrene polymer granule comprising
a) from 5 to 50% by weight of a filler selected from pulverulent inorganic substances such as talc, chalk, kaolin, aluminum hydroxide, aluminum nitrite, aluminum silicate, barium sulfate, calcium carbonate, titanium dioxide, calcium sulfate, silica, quartz flour, aerosil, alumina or wollastonite, and
b) from 2 to 40% by weight of expandable graphite having a mean particle size in the range from 10 to 1000 µm,
c) from 0 to 20% by weight of red phosphorus or an organic or inorganic phosphate, phosphite or phosphonate,
d) from 0 to 10% by weight of carbon black or graphite.

2. The expandable styrene polymer granule according to claim 1, which comprises from 1 to 10% by weight of red phosphorus, triphenyl phosphate or 9,10-dihydro-9-oxa-10-phosphaphenanthrene 10-oxide.

3. The expandable styrene polymer granule according to claim 2, which comprises from 0.1 to 5% by weight of graphite having a mean particle size in the range from 0.1 to 100 µm.

4. The expandable styrene polymer granule according to any of claims 1 to 3, which comprises from 3 to 7% by weight of an organic blowing agent.

5. A process for preparing expandable styrene polymers, comprising the steps of
a) mixing
(i) an organic blowing agent,
(ii) 5-50% by weight, based on the styrene polymer, of a filler, selected from pulverulent inorganic substances such as talc, chalk, kaolin, aluminum hydroxide, aluminum nitrite, aluminum silicate, barium sulfate, calcium carbonate, titanium dioxide, calcium sulfate, silica, quartz flour, aerosil, alumina or wollastonite, and
(iii) from 2 to 40% by weight, based on the styrene polymer, of expandable graphite having a mean particle size in the range from 10 to 1000 µm into the styrene polymer melt by means of static or dynamic mixers at a temperature of at least 150°C,
b) cooling the blowing agent- and filler-containing polymer melt to a temperature of at least 120°C,
c) discharging through a die plate with bores whose diameter at the die outlet is at most 1.5 mm and
d) granulating the blowing agent-containing melt directly beyond the die plate under water at a pressure in the range from 1 to 20 bar.

6. A process for producing particle foam moldings, which comprises prefoaming expandable styrene polymer granules according to claim 1 in a first step by means of hot air or steam to give foam particles having a density in the range from 8 to 200 g/l and, in a second step, fusing them in a closed mold.

## Revendications

1. Granulés de polymère de styrène expansibles, contenant
a) de 5 à 50 % en poids d'une charge, choisie parmi des substances inorganiques pulvérulentes, telles que le talc, le craie, le kaolin, l'hydroxyde d'aluminium, le nitrite d'aluminium, le silicate d'aluminium, le sulfate de baryum, le carbonate de calcium, le dioxyde de titane, le sulfate de calcium, l'acide silicique, la poudre de quartz, l'Aerosil, l'alumine ou la wollastonite et
b) de 2 à 40 % en poids de graphite gonflé ayant une taille moyenne de particule dans la plage de 10 à 1 000 µm.
c) de 0 à 20 % en poids de phosphore rouge ou d'un phosphate, phosphite ou phosphonate organique ou inorganique,
d) de 0 à 10 % en poids de noir de carbone ou de graphite.

2. Granulés de polymère de styrène expansibles selon la revendication 1, **caractérisés en ce qu'**ils contiennent de 1 à 10 % en poids de phosphore rouge, de phosphate de triphényle ou de 9,10-dihydro-9-oxa-10-phospha-phénanthrène-10-oxyde.

3. Granulés de polymère de styrène expansibles selon la revendication 2, **caractérisés en ce qu'**ils contiennent de 0,1 à 5 % en poids de graphite ayant une taille moyenne de particule dans la plage de 0,1 à 100 µm.

4. Granulés de polymère de styrène expansibles selon l'une quelconque des revendications 1 à 3, **caractérisés en ce qu'**ils contiennent de 3 à 7 % en poids d'un agent d'expansion organique.

5. Procédé pour la production de polymères de styrène expansibles, comprenant les étapes suivantes
a) incorporation
(i) d'un agent d'expansion organique,
(ii) de 5 à 50 % en poids, par rapport au polymère de styrène, d'une charge, choisie parmi des substances inorganiques pulvérulentes, telles que le talc, le craie, le kaolin, l'hydroxyde d'aluminium, le nitrite d'aluminium, le silicate d'aluminium, le sulfate de baryum, le carbonate de calcium, le dioxyde de titane, le sulfate de calcium, l'acide silicique, la poudre de quartz, l'Aerosil, l'alumine ou la wollastonite et
(iii) de 2 à 40 % en poids, par rapport au polymère de styrène, de graphite gonflé ayant une taille moyenne de particule dans la plage de 10 à 1 000 µm,
dans la masse fondue de polymère de styrène, au moyen d'un mélangeur statique ou dynamique, à une température d'au moins 150 °C,
b) refroidissement de la masse fondue de polymère contenant agent d'expansion et charge, jusqu'à une température d'au moins 120 °C,
c) décharge à travers une plaque de filière munie d'orifices dont le diamètre à la sortie de la filière est au maximum de 1,5 mm et
d) granulation de la masse fondue contenant un agent d'expansion, directement après la plaque de filière, sous l'eau, sous une pression dans la plage de 1 à 20 bars.

6. Procédé pour la production de pièces moulées en mousse de particules, **caractérisé en ce que** dans une première étape on soumet à une pré-expansion des granulés de polymères de styrène expansibles selon la revendication 1, au moyen d'air chaud ou de vapeur d'eau, pour obtenir des particules de mousse ayant une densité dans la plage de 8 à 200 g/l et, dans une deuxième étape, on les soude dans un moule fermé.
